Europäisches Patentamt

European Patent Office

Office européen des brevets

(11) Publication number: **0 500 178 A1**

# EUROPEAN PATENT APPLICATION

(21) Application number: 92200436.1

(22) Date of filing: 17.02.92

(51) Int. Cl.⁵: **A23D 9/00**, A23G 3/00, A23G 1/00, C11B 7/00

(30) Priority: 21.02.91 EP 91200372

(43) Date of publication of application:
26.08.92 Bulletin 92/35

(84) Designated Contracting States:
AT BE CH DE DK ES FR GB GR IT LI NL PT SE

(71) Applicant: UNILEVER N.V.
Burgemeester s'Jacobplein 1 P.O. Box 760
NL-3000 DK Rotterdam(NL)

(84) BE CH DE DK ES FR GR IT LI NL PT SE AT

(71) Applicant: UNILEVER PLC
Unilever House Blackfriars P.O. Box 68
London EC4P 4BO(GB)

(84) GB

(72) Inventor: Smeenk, Willem Jan
Boterbloem 5
NL-1902 GN Castricum(NL)
Inventor: Zwikstra, Nico
Johan Wagenaarlaan 16
NL-2102 GC Heemstede(NL)

(74) Representative: Hartong, Richard Leroy et al
Unilever N.V. Patent Division P.O. Box 137
NL-3130 AC Vlaardingen(NL)

(54) **Non-lauric filling fats.**

(57) The invention concerns vegetable, non-lauric, non-temper, cool-melting filling fats with a specific N-profile. The fats are obtainable by fractionation of non-lauric vegetable fats, in particular fats that contain hardened soybean oil. The fats can be used for the preparation of filling for confectionery with improved product properties.

Filling fats based on lauric fat compositions have already been known for several years. Although the cool-melting characteristics of these fats are satisfactory, as can be illustrated by their solid fat index profile (= N-line), these fats display one main disadvantage, i.e. their soap-rancidity behaviour is unsatisfactory. The taste of these fats can therefore become unacceptable after storage for a couple of weeks at room temperature.

Filling fats that do not display such an unacceptable soap rancidity are also known. However, these fats are based on palm fractions. In these fats considerable amounts (at least 30 wt.%) of 1.3-saturated-2-unsaturated (= SOS) triglycerides are present. The presence of such amounts of SOS fats, however, leads to another disadvantage : When these fats are applied in chocolate confectioneries, a tempering step is unavoidable. As tempering is complicated, time-consuming and expensive, it will be understood that it is preferred to apply fats that do not require a tempering step.

From DE 2717602 hard fat compositions are known that are compatible with cocoabutter and at the same time display good mouthfeel and shrinkage properties. However, these fats display N-values at 20°C and 32.5°C of at least 30 and at least 20, respectively, making them unsuitable as filling fat (cf. Fig. 4 and 5 in particular). Although these fats can be obtained from the same kind of starting fats as we can apply in our invention, while also hardening and wet fractionation of the fats and/or fat mixtures are performed, the resulting fats are different from our fats, as a result of the difference in the parameters chosen for the wet fractionation.

According to FR 2 312 198 cocoabutter replacement fats (= CBE's) are known that display N-values of 40 or higher at 20°C, 15 or higher at 30°C and 0-1 at 35°C (cf. Table II). However, these fats are examples of fats that need tempering, as can be concluded from the carbon numbers mentioned (rich in $C_{50}$-$C_{52}$). Moreover, an $N_{30}$ of 15 is too high for a cool-melting filling fat; consequently, no use as filling fat is mentioned in this French patent.

We have now found new fat compositions that combine the advantage of non-rancidity with the non-tempering behaviour, while the good cool-melting behaviour of these fats is retained.

Thus, the fats according to the invention are vegetable, non-lauric, non-temper, cool-melting filling fats that are characterized by an N-profile (NMR, non-stabilized) according to : $N_{20} \geq 45$; $N_{30} \leq 12$ and $N_{32.5} \leq 2.0$.

Preferred N-profiles are     $N_{20} \geq 47$;

                             $N_{30} \leq 9$;

                             $N_{32.5} \leq 1.8$.

These fats preferably contain less than 15 wt.% of triglycerides with 50 C-atoms, less than 47.5 wt.% of triglycerides with 52 C-atoms and at least 35 wt.% of triglycerides with 54 C-atoms. Preferred ranges are : 5-12% $C_{50}$; 25-45% $C_{52}$ and 37-65% $C_{54}$.

These fats do not contain more than 5 wt.% of lauric acid residues, in particular less than 0.5 wt.%.

Fat blends that meet the above requirements are e.g. olein fractions of the fractionation of a hardened mixture of soybean oil and palm oil olein or olein fractions of the fractionation of a mixture of hardened soybean oil and hardened cottonseed oil.

Blends of a mid-fraction of the fractionation of a hardened mixture of soybean oil and cottonseed oil and an olein fraction of this same fraction also display the desired properties.

It should be understood here that fractionation and hardening are treatments that can be carried out in either order. So, hardened fat fractions but also fractions of hardened fat can be applied. Also, hardening can occur before or after blending of specific fats and/or fat fractions.

Very good results are obtained when the fat to be fractionated consists of a hardened mixture of 40-95 wt.% of palm oil olein and 60-5 wt.% of soybean oil. The hardening is best performed until a fat having a melting point of 38°C has been obtained.

An even better result is obtained when the fractionation is a wet fractionation (= using an organic solvent), while the fat that is subjected to the wet fractionation consists of a hardened mixture of 60-80 wt.% of palm oil olein and 40-20 wt.% of soybean oil.

Excellent results are also obtained when the filling fat is an olein fraction of the fractionation of a mixture of hardened soybean oil and hardened cottonseed oil.

After the hardening, the melting point of the mixture is preferably 36°C. The fat blend that is fractionated comprises in particular a mixture of 40-95 wt.%, preferably 40-60 wt.%, of hardened soybean oil and 60-5 wt.%, in particular 60-40 wt.%, of hardened cottonseed oil. The fractionation is preferably performed as a wet fractionation, using a ketone or a hydrocarbon as solvent.

Another excellent filling fat is obtained by blending 90-30 wt.% of a mid-fraction of the fractionation of a hardened mixture of soybean oil and cottonseed oil with 10-70 wt.% of the olein fraction of this same fractionation. The preferred ratio of these fractions is 45-55 wt.% of the mid-fraction and 55-45 wt.% of the olein fraction.

Part of the invention are also fat-containing confectionery fillings, wherein a filling fat as described above is present as fat component. In addition to this fat, the common ingredients for a filling will be present, e.g. sweeteners like sucrose, and/or artificial sweeteners like aspartame, fillers like starches, pectin etc. and emulsifiers like lecithin, monoglycerides etc. Gelling agents can also be present.

The filling can consist for 20-60 wt.%, in particular for 30-50 wt.%, of the filling fat. In addition to the filling fat of the invention, another fat can be present. The amount of other fat can vary from 10-35 wt.% based on the total filling. The other fat can be chosen from the group consisting of cocoa butter, nut oil, in particular groundnut oil and hazelnut oil, butterfat, fractions and/or combinations thereof.

It is preferred that the confectionery filling also contains some cocoa powder, preferably 10-40 wt.%.

Food products containing the filling fat and/or the confectionery filling according to the invention are also part of the invention.

Another aspect of the invention is that the fat blends are used in confectionery fillings in order to improve the soap-rancidity and/or the tempering behaviour and/or the cool-melting properties of confectionery fillings.

As has already been disclosed above, the fractionations that have to be performed for the preparation of the various fat components are preferably wet fractionations. In these fractionations an organic solvent is used, e.g. a ketone like acetone or methyl ethyl ketone or a hydrocarbon like petroleum ether or hexane. The fats are mixed with the solvent in ratios of 2-10 volumes of solvent per weight unit of fat (l/kg). The fats are dissolved at temperatures above ambient and the mixture is suitably cooled to about 12-25°C, in particular 14-22°C. In this way, 65-90 wt.% of the original amount of fat that has been wet-fractionated, can be obtained as the olein fraction after separation of the stearin fraction and removal of the solvent by evaporation.

### EXAMPLE I

A mixture of 30 wt.% of soybean oil and 70 wt.% of palm oil olein was hardened to a melting point of 38°C.

This mixture was wet-fractionated with acetone as solvent (ratio acetone/fat = 6.5 l/kg) at about 17°C. After separation of the solid (= stearin) fraction, the acetone was evaporated. The olein fraction was obtained in a yield of 75 wt.%.

The olein fraction displayed the following N-profile (NMR standard method, not stabilized) : $N_{20}$ = 47; $N_{30}$ = 3.5 and $N_{32.5}$ = 0.

The slip melting point of the product was 29°C while the I.V. was 67.

From a FAME analysis it could be concluded that 21.8% $C_{16}$ and 68% $C_{18.1}$ were present.

The product showed acceptable taste properties, it could be used without tempering, it had acceptable non-blooming properties and was very useful as filling fat in confectionery compositions. Upon storage the products did not develop soapiness.

The carbon number distribution of this mixture is mentioned in the Table.

### EXAMPLE II

A blend (50/50) was made of soybean oil and cottonseed oil. This blend was hardened to 36°C. The hardened product was wet-fractionated (acetone; ratio: 6 l of acetone per kg of fat; temperature 19°C).

After separation of the stearin fraction and removal of the solvent, the olein fraction was obtained in a yield of 90 wt.%.

The N-profile of the product was :

$N_{20}$ = 45; $N_{30}$ = 12; $N_{32.5}$ = 1.

The product showed good properties.

The carbon number distribution is mentioned in the Table.

### EXAMPLE III

A blend was made of a mid-fraction of the wet fractionation (acetone, ratio 7.0, T = 0°C and 21°C) of a hardened mixture (60:40) of soybean oil and cottonseed oil and of the olein fraction of this same wet fractionation.

The ratio of the two components was 55 wt.% of mid-fraction and 45 wt.% of olein fraction.

The N-profile of this blend was :

$N_{20}$ = 50; $N_{30}$ = 9 and $N_{32.5}$ = 2.0.

The product properties are very good.
The carbon number distribution is mentioned in the Table.

Example IV

A filling was made from the following ingredients in the amounts mentioned.

```
Fat blend of example I        45 grams
Skimmed milk powder            5    "
Cocoa powder (10/12)           5    "
Sugar                         34.5  "
Dextrose                      10    "
Emulsifier                     0.5  "
                             100 grams
```

Example V

A filling was made of the following ingredients in the amounts mentioned:

```
Fat blend of example III      33 grams
Hazelnut oil                  20    "
Cocoa powder (10/12)           7    "
Sugar                         39.1  "
Emulsifier                     0.9  "
                             100 grams
```

Example VI

The fillings of the example IV and V were used as fillings in chocolate shells.
The products so obtained performed well and did not develop any soap rancidity upon storage at room temperature after 3 weeks.

TABLE

| Carbon number distribution of fats of Examples 1-3. | | | |
|---|---|---|---|
| Triglycerides GLC % | Example 1 | Example 2 | Example 3 |
| $C_{46}$ | 0.2 | - | - |
| $C_{48}$ | 1.5 | 0.7 | 0.5 |
| $C_{50}$ | 10.0 | 7.3 | 6.4 |
| $C_{52}$ | 47.4 | 32.6 | 31.1 |
| $C_{54}$ | 37.7 | 56.6 | 61.3 |
| $C_{56}$ | 1.3 | 1.6 | 0.3 |
| $C_{58}$ | 0.3 | 0.5 | 0.3 |

**Claims**

1. Vegetable, non-lauric, non-temper, cool-melting filling fat, characterized by an N-profile (NMR, non-stabilized) according to $N_{20} \geq 45$; $N_{30} \leq 12$ and $N_{32.5} \leq 2.0$.

2. Filling fat according to Claim 1, wherein the N-profile is $N_{20} \geq 47$; $N_{30} \leq 9$ and $N_{32.5} \leq 1.8$.

3. Filling fat according to Claims 1-2, wherein the fat contains less than 5 wt.% of lauric acid residues.

4. Filling fat according to Claims 1-3, wherein the fat is an olein fraction of the fractionation of a hardened mixture of soybean oil and palm oil olein.

5. Filling fat according to Claim 4, wherein the fat mixture that is subjected to the fractionation consists of a hardened mixture of 40-95 wt.% of palm oil olein and 60-5 wt.% of soybean oil.

6. Filling fat according to Claims 4-5, wherein the olein fraction is the product of a wet fractionation.

7. Filling fat according to Claim 6, wherein the fat mixture that is subjected to the wet fractionation consists of a hardened mixture of 60-80 wt.% of palm oil olein and 40-20 wt.% of soybean oil.

8. Filling fat according to Claims 1-3, wherein the fat is an olein fraction of the fractionation of a mixture of hardened soybean oil and hardened cottonseed oil.

9. Filling fat according to Claim 8, wherein the fat that is fractionated consists of a mixture of 40-95 wt.% of hardened soybean oil and 60-5 wt.% of hardened cottonseed oil.

10. Filling fat according to Claim 8 or 9, wherein the olein fraction is the product of a wet fractionation.

11. Filling fat according to Claim 10, wherein the fat mixture that is wet-fractionated consists of a mixture of 40-60 wt.% of hardened soybean oil and 60-40 wt.% of hardened cottonseed oil.

12. Filling fat according to Claims 1-3, wherein the fat is a blend of a mid-fraction of the fractionation of a hardened mixture of soybean oil and cottonseed oil and an olein fraction of this same fractionation.

13. Filling fat according to Claim 12, wherein the fat blend consists of 90-30 wt.% of the mid-fraction and of 10-70 wt.% of the olein fraction.

14. Filling fat according to Claims 12-13, wherein the fat blend consists of 45-55 wt.% of the mid-fraction and of 55-45 wt.% of the olein fraction.

15. Fat-containing confectionery fillings, wherein a filling fat as described in Claims 1-14 is present as fat component.

16. Confectionery filling according to Claim 15, wherein 20-60 wt.%, in particular 30-50 wt.%, of the filling fat of Claims 1-14 is present.

17. Confectionery filling according to Claims 15-16, wherein, in addition to the filling fat of Claims 1-14, 10-35 wt.% of another fat is present.

18. Confectionery filling according to Claim 17, wherein the other fat is chosen from the group consisting of cocoa butter, nut oil, butterfat, fractions and/or combinations of these.

19. Confectionery filling according to Claim 18, wherein the nut oil is groundnut oil and/or hazelnut oil.

20. Confectionery filling according to Claims 16-19, wherein cocoa powder is also present.

21. Food products, wherein a filling fat and/or confectionery filling is present, comprising the compositions of Claims 1-20.

22. Use of fat blends in confectionery fillings, characterized by the use of the filling fats with the composition according to Claims 1-14 in order to improve the soap rancidity and/or the tempering behaviour and/or the cool-melting properties of confectionery fillings.

23. Fractionation of a fat composition containing non-lauric vegetable fat, in particular a hardened soybean oil, wherein the fractionation is performed as a wet fractionation, using an organic solvent, preferably acetone or hexane, while the fractionation is carried out at 14-22°C with removal of an olein fraction with the N-profile as given in Claim 1 or 2, in an amount of 65-90 wt.% of the fat that is fractionated.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 464 881 (UNILEVER NV)<br>* the whole document *<br>--- | 1-23 | A23D9/00<br>A23G3/00<br>A23G1/00 |
| X | WORLD PATENTS INDEX<br>Section Ch, Week 8016,<br>Derwent Publications Ltd., London, GB;<br>Class D, AN 80-28519C<br>& JP-A-55 034 052 (ASAHI DENKA KOGYO) 11 March 1980<br>* abstract *<br>--- | 1,2 | C11B7/00 |
| A | WO-A-8 601 684 (NABISCO BRANDS, INC.)<br>* page 16, line 21 - page 22, line 8; claims 1-19; examples I-VI *<br>--- | 1-23 | |
| D,A | DE-A-2 717 602 (ASAHI DENKA KOGYO)<br>* page 5, paragraph 1 - page 13, paragraph 5 *<br>* page 15 - page 16; example 3 *<br>* page 20 - page 21; example 8 *<br>"Bezugsbeispiel"<br>* page 23 - page 24 *<br>* claims 1-8 *<br>--- | 1-23 | |
| | | | TECHNICAL FIELDS SEARCHED (Int. Cl.5) |
| D,A | FR-A-2 312 198 (KARLESKIND ALAIN)<br>* the whole document *<br>--- | 1-23 | A23D<br>A23G<br>C11B |
| A | US-A-4 748 041 (K.W. PLAYER ET AL.)<br><br>* column 4, line 1 - line 22 *<br>* column 5, line 1 - line 18 *<br>--- | 1,8,15,<br>21-23 | C11C |
| A | US-A-4 753 812 (L.L. WILSON ET AL.)<br><br>* column 4, line 8 - line 25 *<br>* column 4, line 65 - column 5, line 14 *<br><br>----- | 1,8,15,<br>21-23 | |

The present search report has been drawn up for all claims

| Place of search | Date of completion of the search | Examiner |
|---|---|---|
| THE HAGUE | 26 MAY 1992 | DEKEIREL M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)